# EUROPEAN PATENT APPLICATION

(11) **EP 1 127 953 A2**
(43) Date of publication of application: **29.08.2001**
(21) Application number: 00401502.0
(22) Date of filing: 29.05.2000
(51) Int. Cl.: C22F 1/18, B23P 15/00, B21K 1/22, C22C 14/00

(54) **Method of manufacturing a ti alloy poppet valve**

(30) Priority: 23.02.2000 JP 2000045791
(71) Applicant: FUJI OOZX INC., Fujisawa-shi, Kanagawa-ken (JP)
(72) Inventor: Asanuma, Hiroaki, Fujisawa-shi, Kanagawa-ken (JP)
(74) Representative: Schrimpf, Robert

(57) **Abstract**

A bar material is made of (α + β) or near α Ti alloy which comprises regular α structure, and the end thereof is heated at temperature above β transformation point by electric forging device to form an enlarged portion. The enlarged portion is immediately formed by hot forging to make a valve head of a poppet valve which is employed in an internal combustion engine. The valve head comprises acicular α structure which provides higher fatigue and tensile strengths.

## Description

### BACKGROUND OF THE INVENTION

The present invention relates to a method of manufacturing a Ti alloy poppet valve in which a high-temperature strength is improved in a valve head of the valve.

Instead of an ordinary heat-resistant steel, a poppet valve is formed out of a Ti alloy which has low specific gravity and high specific strength to decrease inertia mass of a valve operating mechanism to increase performance in an internal combustion engine.

However, heat resistance temperature of an ordinary (α + β) alloy has the upper limit of about 500°C, which is lower than that of heat resistant austenitic steel. In view of fatigue and tensile strengths it would be difficult to apply an ordinary Ti alloy to an exhaust valve in which working temperature is higher than that of an inlet valve.

To overcome the disadvantage, as disclosed in Japanese Patent Pub. No.62-197610, a valve head which requires heat resistance and a valve stem which has lower thermal load are molded from a high heat-resistant Ti alloy such as Ti-6Al-2Sn-4Zr-2Mo and an ordinary Ti alloy such as Ti-6Al-4V respectively, and both are welded. As disclosed in Japanese Utility Model Pub. No.63-171604, a valve stem made of heat-resistant steel is combined with a valve head made of high heat-resistant Ti alloy, or a valve stem made of Ti alloy is combined with a valve head made of heat-resistant steel.

When the high heat-resistant alloy is used in the valve head as above, heat-resistance temperature of the valve head forged and manufactured below β transformation point to obtain ordinary hot forging or regular α structure is limited to 600°C, and there is disadvantage on fatigue and tensile strengths to use as an exhaust valve for a high-load engine in which temperature of a valve head becomes about 800°C.

In the conventional valve as above, the valve head and stem are made of different materials respectively, and the valve in which they are combined provides low tensile strength and reliability and increase the number of manufacturing steps to increase cost. Furthermore, a valve in which Ti alloy is connected to a heat-resistant steel could not lighten the valve.

### SUMMARY OF THE INVENTION

In view of the disadvantages in the prior art, it is an object of the present invention to provide a method of manufacturing a Ti alloy poppet valve which is light and inexpensive to improve fatigue and tensile strengths greatly which is required for a valve head under high temperature, the valve being made of a single alloy.

According to the present invention, there is provided a method of manufacturing a Ti alloy poppet valve, comprising the steps of:
heating an end of a bar material made of (α + β) or near α alloy which comprises regular α structure at temperature above β transformation point to make an enlarged portion; and
forming said enlarged portion by hot forging into a valve head having acicular α structure.

Only the valve head is easily formed to the acicular α structure to increase fatigue and tensile strengths under high temperature. Compared with a conventional valve in which a valve stem is welded to a valve head, the valve made of a single alloy according to the present invention provides higher strength, smaller weight and simplification of manufacturing steps.

### BRIEF DESCRIPTION OF THE DRAWINGS

The features and advantages of the present invention will become more apparent from the following description with respect to embodiments based on the accompanying drawings wherein:
Fig. 1 is a front elevational view of a poppet valve manufactured by a method according to the present invention;
Fig. 2 is a partially cutaway front view which shows the step of forming an enlarged portion at one end of a valve stem;
Fig. 3 is a vertical sectional front view which shows the step of forming of a valve head;
Fig. 4 is a photocopy of micrograph of the valve head after forming;
Fig. 5 is a graph which shows the results of fatigue test; and
Fig. 6 is a graph which shows the results of tensile test.

### DETAILED DESCRIPTION OF PREFERED EMBODIMENTS

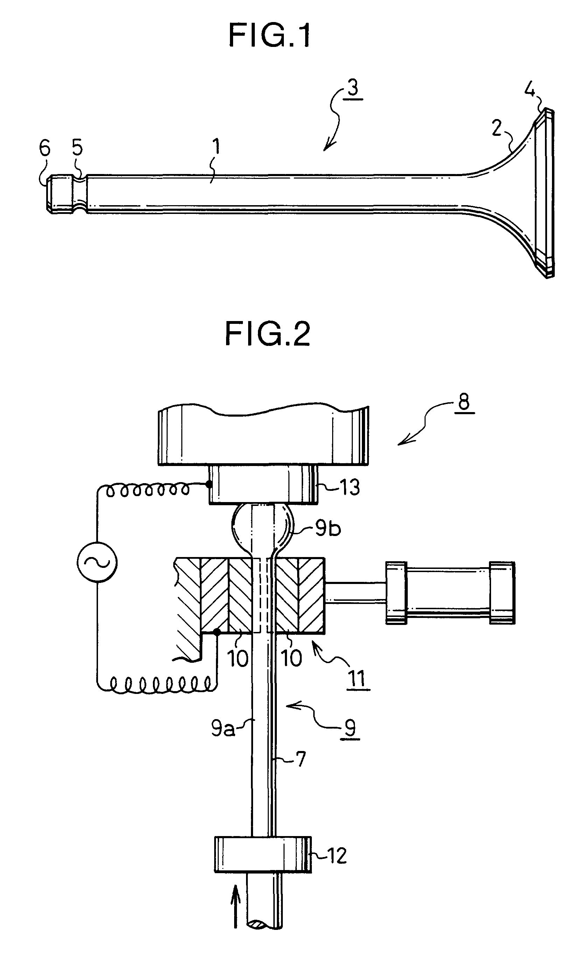

Fig. 1 illustrates a finished product of a Ti alloy poppet valve manufactured by a method of the present invention. A poppet valve 3 which comprises a valve stem 1 and a valve head 2 at the end thereof is made of (α + β) Ti alloy such as Ti-6Al-4V, Ti-6Al-6V-2Sn, Ti-6Al-2Sn-4Zr-6Mo, or near α alloy which contains a little β phase of less than 10%, such as Ti-6Al-2Sn-4Zr-2Mo and Ti-8Al-1Mo-1V.

Surface treatment such as nitriding, carburizing and ion plating is applied to a valve face 4, a portion which contacts valve guide, a cotter groove 5 and an axial end face 60 which require wear resistance, so that the surface layer which has depth of 3 to 5 *µ*m is hardened. The surface treatment may be applied to the whole surface of the valve 3. The whole valve head 2 comprises acicular α phase and is made dense.

A method of manufacturing the Ti alloy poppet valve will be carried out as below.

As shown in Fig. 2, a bar material 7 made of (α + β) or near α alloy which comprises a regular α structure is forged by an electric forging device or upsetter 8 to form a valve intermediate 9 which has an enlarged portion 9b at the upper end of a valve stem 9a.

The upper end of the bar material 7 is slidably supported by a lower electrode 11 which comprises a pair of electrode portions 10,10. By elevating an elevating table 12, the material 7 is pressed upwards and the upper end thereof is engaged with the lower surface of an upper electrode 13. At the same time, an electric current is applied to the upper and lower electrodes 11,13.

Thus, the upper end of the bar material 7 between the upper and lower electrodes 11,13 is locally heated by electric resistance, and softened. The elevating table 12 is further elevated, and the upper end of the material 7 is forged to form a high-temperature enlarged portion 9b.

By controlling the electric current which flows between the upper and lower electrodes 11,13, temperature of the enlarged portion 9b becomes above β transformation point. The β transformation point is 995°C on (α + β) alloy and 1015°C on near α alloy.

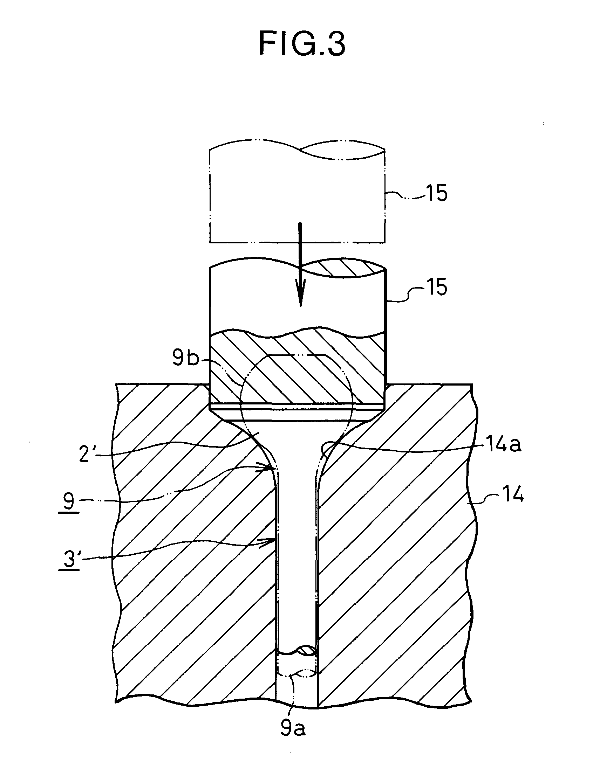

The enlarged portion 9b is inserted into a hole 14a of a die 14c of a hot forging device in Fig. 3 before the temperature of the enlarged portion 9a becomes below β transformation point. The upper part of the hole 14a is corresponding in shape to the valve head 2 of the valve 3 to be manufactured.

Right after the valve intermediate 9 is inserted into the hole 14a, a punch 15 is lowered by a predetermined stroke and hot forging is applied to the enlarged portion 9b. Therefore, the enlarged portion 9b is plastically deformed to form a valve body 3' which has a valve head 2' at one end.

The valve head 2' after forming becomes acicular α structure since temperature of the enlarged portion 9b is above β transformation point during forming of the valve intermediate 9, and the valve head 2' is rapidly cooled by the punch 15 and the die 14 during forging to make very dense α structure.

The valve head 2' which comprises acicular α structure improves fatigue strength, tensile strength and creep properties at higher temperature compared with a conventional valve to which hot forging is applied below β transformation point.

The valve stem 9a which is not heated still comprises regular α structure the same as the raw material to provide sufficient tensile strength which complies with strength required for the valve stem 9a.

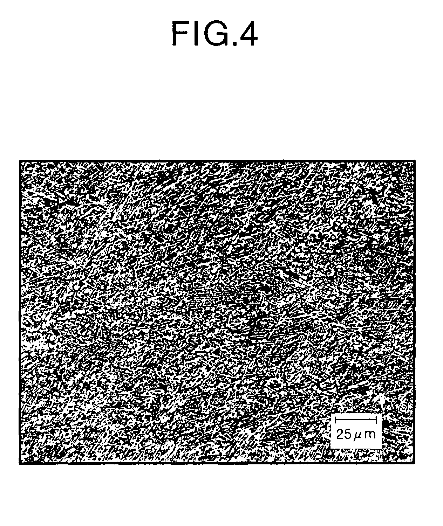

Fig. 4 is a photocopy of a micrograph of the valve head 2' which is formed from a near α alloy such as Ti-6Al-2Sn-4Zr-2Mo, and is made of dense acicular structure. The inventor et al manufacture test pieces by the same way as that of the valve head 2' from near α alloy, Ti-6Al-2Sn-4Zr-2Mo and measured fatigue and tensile strengths.

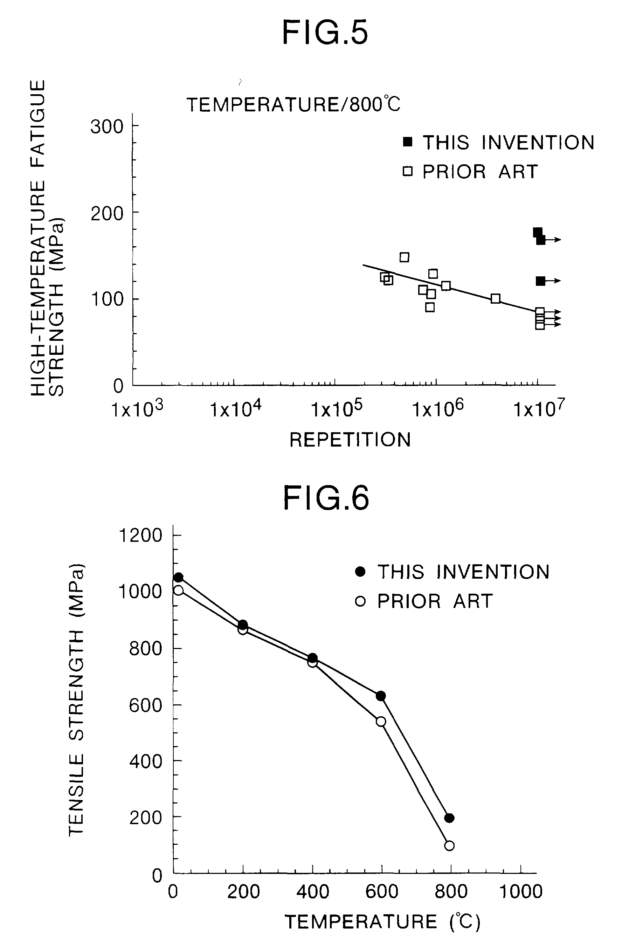

The results are shown in Figs. 5 and 6. As shown in Fig. 5, high-temperature fatigue strength or stress amplitude at 10⁷ times is about 190Mpa in the present invention, while it is about 80Mpa in the prior art in which it is formed at temperature below general β transformation point. The pieces made by the present invention have fatigue strength equal to or higher than that of heat-resistant austenitic steel for a valve.

In tensile strength as shown in Fig. 6, the pieces made by the method of the present invention are higher than those in the prior art over the whole temperature range, and difference becomes larger as it becomes closer to higher temperature range. Advantages of the acicular α structure are shown. Finishing mechanical working is applied to each part of the valve body 3' in which the valve head 2' in Fig. 3 is formed. Thereafter, the foregoing surface treatment is applied to the valve surface for which wear resistance is required, thereby providing the poppet valve made of Ti alloy as shown in Fig. 1.

The foregoing relate to embodiments of the present invention. Various changes and modifications may be made by persons skilled in the art without departing from the scope of claims wherein:

## Claims

1. A method of manufacturing a Ti alloy poppet valve, comprising the steps of:
heating an end of a bar material made of (α + β) or near α alloy which comprises regular α structure at temperature above β transformation point to make an enlarged portion; and
forming said enlarged portion by hot forging into a valve head having acicular α structure.

2. A method as claimed in claim 1 wherein said step of forming said enlarged portion is immediately carried out before temperature of the enlarged portion becomes below the β transformation point.

3. A method as claimed in claim 1 wherein said step of heating the end of the bar material comprises applying an electric current to the end by electrodes of an electric forging device.

4. A method as claimed in claim 1 wherein said step of forming said enlarged portion comprises pressing the enlarged portion in a hole of a die by a punch.

5. A method as claimed in claim 1 wherein said (α + β) alloy comprises any one of Ti-6Al-4V, Ti-6Al-6V-2Sn and Ti-6Al-2Sn-4Zr-6Mo.

6. A method as claimed in claim 1 wherein said near α alloy comprises Ti-6Al-2Sn-4Zr-2Mo or Ti-8Al-1Mo-1V.

7. A method as claimed in claim 5 wherein the β transformation point is 995°C.

8. A method as claimed in claim 6 wherein the β transformation point is 1015°C.
